Europäisches Patentamt

European Patent Office

Office européen des brevets

(19)

(11) **EP 0 703 279 B1**

(12) **EUROPÄISCHE PATENTSCHRIFT**

(45) Veröffentlichungstag und Bekanntmachung des Hinweises auf die Patenterteilung:
**14.06.2000 Patentblatt 2000/24**

(51) Int Cl.[7]: **C08L 101/00**

(21) Anmeldenummer: **95114500.2**

(22) Anmeldetag: **15.09.1995**

(54) **Thermoplastische Formassen mit Gasbarriere - Eigenschaften**

Thermoplastic molding compositions having gas barrier properties

Composition pour un moulage thermoplastique ayant des propriétés barrière au gaz

(84) Benannte Vertragsstaaten:
**AT BE CH DE ES FR GB IE LI NL SE**

(30) Priorität: **21.09.1994 DE 4433664**

(43) Veröffentlichungstag der Anmeldung:
**27.03.1996 Patentblatt 1996/13**

(73) Patentinhaber: **Buna Sow Leuna Olefinverbund GmbH**
**06258 Schkopau (DE)**

(72) Erfinder:
• **Gerecke, Jochen, Dr.**
**D-06122 Halle (DE)**
• **Göthel, Gabriele**
**D-06217 Merseburg (DE)**
• **Wulff, Dirk, Dr.**
**D-06126 Halle (DE)**
• **Gruber, Klaus**
**D-06128 Halle (DE)**
• **Lipp, Roland, Dr.**
**D-27432 Bremervörde (DE)**

(56) Entgegenhaltungen:
**EP-A- 0 015 556**

**Beschreibung**

Die Erfindung betrifft thermoplastische Formmassen mit Gasbarriere-Eigenschaften auf der Grundlage von Polymerblends unter Verwendung von Ethylen/Vinylalkohol-Copolymeren und/oder Polyamiden und/oder anderen Thermoplasten mit hoher Gasbarrierewirkung.

Polymermaterialien zum Verpacken von empfindlichen bzw. leicht verderblichen Lebensmitteln und anderen, besonders gegen oxidativen Abbau zu schützenden Produkten, wie z.B. verschiedenen Kosmetika, Pharmazeutika und (Agro-)Chemikalien, müssen außer einer guten thermoplastischen Verarbeitbarkeit vor allem über eine hohe Sperrwirkung gegenüber Sauerstoff sowie den anderen atmosphärischen Gasen und nicht zuletzt gegenüber verschiedenen Flüssigkeiten/Lösungsmitteln, Aroma- und Duftstoffen verfügen. Diese anspruchsvollen Anforderungen, von einem einzigen Kunststoff allein nicht erfüllbar, können durch Kombinationen von mehreren, sich in ihren Eigenschaften ergänzenden Polymeren erfüllt werden. Dabei hat sich besonders der Einsatz verschiedener Polymerblends mit hoher Gasbarrierewirkung zumeist im Verbund mit mehreren Polymerschichten unterschiedlicher Sperrwirkung (Kaschierverbunde, Laminate und besonders coextrudierte Mehrschichtfolien), einschließlich der Verwendung von Polymerklebern oder Haftvermittler(-schichten), als erfolgreich erwiesen (U. König u. H. Schuch, Kunststoffe 67 (1977)1, S. 27-31; R. Rellmann u. H. Schenck, Kunststoffe 82 (1992)9, S. 729-738; F. Hensen u.a., Kunststoffe 71 (1981)9, S. 530-538). Ermittelte Permeationen von Gasen, im allgemeinen von $O_2$, $CO_2$ und $N_2$, durch Kunststoff-Folien und Kunststoff-Hohlkörper (entsprechend DIN 53380) zeigen, daß besonders spezielle polare Gruppen in den Polymeren Voraussetzung für geringe Gasdurchlässigkeiten sind. Da aber die polaren Homopolymeren mit den geringsten Gaspermeationen, wie Polyvinylalkohol (PVAL), Polyacrylnitril (PAN) und Polyvinylidenchlorid (PVDC), entweder nicht oder nur äußerst schwierig thermoplastisch verarbeitbar sind, wird - unter Inkaufnahme höherer Permeabilitäten - auf geeignete Copolymerisate, insbesondere Ethylen/Vinylalkohol-Copolymere (EVAL), erhalten durch Verseifung von Ethylen/Vinylacetat-Copolymerisaten (EVA) mit hohem Vinylacetat (VAC)-Gehalt, Styren/Acrylnitril-Copolymere (SAN) mit hohem Acrylnitril (AN)-Anteil (high Nitriles/70 % AN) und thermoplastisch verarbeitbare Vinyliden (VDC) / Vinylchlorid (VC)-Copolymere, oder auf andere thermoplastische Materialien, insbesondere Polyamide (PA) und Polyterephthalsäureester (SP), für viele Anwendungsfälle auf dem Lebensmittelverpackungssektor günstigerweise in mono- oder biaxial gereckter Form, zurückgegriffen.

Der Einsatz der genannten thermoplastischen Sperrschichtmaterialien wird häufig über die Herstellung heterophasiger Polymerblends erreicht, wobei außer den genannten Gasbarriere-Polymeren zumeist weitere Thermoplaste mit hoher Gasdurchlässigkeit und dafür geringerer Feuchte (Wasserdampf-)- Permeation, insbesondere Polyolefine (PO), wie Polyethylene (PE), Polypropylene (PP) und verschiedene Ethylen- und/oder Propylen-Co- und -Terpolymerisate, eingesetzt werden (H.-O. Roppel, Kunststoffe 77 (1987)5, S. 485-492.

Als eine der bevorzugten Gasbarriere-Komponenten gelangt EVAL, d.h. verseiftes EVA mit einem Ethylenanteil zwischen etwa 20 und 60 Mol-% und einem Verseifungsgrad von zumeist ≥ 95 %, zum Einsatz (US 3.975.463, US 4.468.427).

Recht vielfältig ist die diesbezügliche Verwendung von PA, d.h. teilkristallinen aber auch amorphen Homo- und Co-Polyamiden, wie z.B. die gebräuchlichsten teilkristallinen Polycaprolactame (PA 6) und Polyhexamethylenadipamide (PA 66) in schlauchförmigen Verpackungsfolien zur Umhüllung von pastösen Lebensmitteln (DE 2850 182), wobei für einschichtige Wursthüllen auch Mischungen aus PA und Polyethylen- bzw. Polybutylenterephthalat (PET bzw. PBT) oder deren Copolyestern eingesetzt werden können (EP 176.980).
Eine Erhöhung besonders der Sauerstoff-Sperrwirkung von PET/PA (außer PA 6, PA 66 auch teilkristalline partiellaromatische PA, die sogenannten Polyarylamide) wird durch Einbau von 50 bis 1000 ppm eines Metallsalzes aus der Reihe der Übergangsmetallacetate und -chloride (US 5034.252) oder - bei gleichzeitigem Zusatz eines Anteils an säuremodifiziertem Copolyester - durch Hinzufügen von 10 bis 100 ppm einer Kobaltverbindung (JP 03.193.325) erreicht.

Vor allem Kombinationen aus PA und EVAL, auch zu biaxial gereckter Schlauchfolie verarbeitbar, besitzen im allgemeinen eine sehr hohe Gas-Sperrwirkung (EP 216.094; DE 3624.577; DE 3637.446; DE 4128.081; DE 4130.485; JP 44.24227; JP 54.78749; JP 54.78750).

In den PA/EVAL-Kombinationen unterschiedlicher Zusammensetzung werden außer den zumeist teilkristallinen aliphatischen PA, einschließlich ihren Mischungen untereinander sowie entsprechenden Copolyamiden, auch teilkristalline Polyarylamide, vorzugsweise Poly (m-Xylylenadipamid) (PA-MXD 6) (JP 03.188.146), und amorphe PA, wie z.B. Polyhexamethylenisophthalamid (PA 6I) (EP 466.521, US 5003.002), sowie Mischungen aus teilkristallinen und amorphen PA (EP 467.688; JP 03.175.032, JP 03.188.146) eingesetzt, um sowohl die Sperrwirkung gegen Sauerstoff bei höherer Feuchtigkeit (W.J. Korros, ACS Symp. Series 423, Washington D.C. 1990, S. 111-125) als auch - besonders mittels Polyarylamidanteilen - die Beständigkeit gegenüber thermischer und oxidativer Zersetzung zu verbessern.

Um die feuchteanfälligen EVAL-Barrierematerialien hinsichtlich ihrer Verarbeitungsbreite sowie ihrer Feuchteunempfindlichkeit, gleichzeitig verbunden mit einer fast sprunghaften Erhöhung der Gassperrwirkung, zu verbessern, wird es - außer mit den oben genannten Barrierepolymeren PA und Polyester - für viele Einsatzfälle mit Anteilen bis zu maximal 50 Masse-% mit anderen, zumeist deutlich geringere Sperreigenschaften gegenüber Gasen und organischen Lösemitteln aufweisenden Thermoplasten abgemischt (US 5003.002; JP 03.175.032; JP 05.271.497).

I)ie Vielzahl möglicher Polymerblend-Kombinationen ergibt sich durch die Verwendbarkeit von PA und/oder EVAL und gegebenenfalls Polyestern (PET, PBT) als Hauptbarriere-Komponente(n) sowie einer weiteren Polymerkomponente, wie z.B. einem Olefinpolymer (JP 03.097.737; JP 03.100.024; EP 217.069), die oft über gezielt ein- oder pfropf polymerisierte reaktive funktionelle Gruppen, insbesondere Säureanhydrid- oder Carboxylgruppen, gegebenenfalls mit Metallsalzen zu den entsprechenden Ionomeren umgesetzt, über die erforderliche Polymerblendverträglichkeit verfügen (DE 1.241.606; EP 217.069; EP 450.435; EP 470.486; FR 2.586.027; CA 1.282.926; JP 93.64868; JP 93.78534; JP 93.193.081).

Die im Gasbarrierepolymer (EVAL und/oder PA)/PO-Blend eingesetzten Verträglichkeitsvermittler (VM) richten sich in ihrer chemischen Zusammensetzung und ihrer Konzentration - unter Berücksichtigung der vorgesehenen Verarbeitungstechnik und -technologie - nach den speziellen Anwendungen. So sichern 2 bis 10 Masse-% eines durch Schmelzepfropfung erhaltenen carboxylierten Polyethylens in etwa aus gleichen Masseanteilen PA und PE oder PP bestehenden Polymerblends sowohl eine höhere Schlagzähigkeit als auch eine höhere Gas- und Flüssigkeits-Sperrwirkung im Vergleich zu den entsprechend ohne VM (unmodifizierten) zusammengesetzten PA/PO-Blends (US 3.373.222).

In EP 015556 A1 werden Formmassen, bestehend aus 60-95 Gew.% Polyolefin, 5-40 Gew.% eines zweiten, mit der Polyolefinkomponente unverträglichen Polymers sowie 0,5 bis 3 Gew.% eines bekannten Kompatibilisators, insbesondere eines alkylcarboxyl-substituierten Olefinpolymers, mit spezifischen Barriere-Eigenschaften gegenüber Vergaserkraftstoffen und Sauerstoff beschrieben.

Diese heterogenen Formmassen bestehen aus einem Polyolefin, insbesonder einem Polyethylen, mit geringer Barrierewirkung und einem lamellenförmig eingelagerten unverträglichen Polymer, insbesondere aus der Reihe der Polyamide und gesättigten Polyester, mit hoher Barrierewirkung. Um die Lamellenstruktur bei der Verarbeitung nicht zu zerstören, ist eine im allgemeinen übliche Homogenisierung der Polymermischung vor ihrer Formgebung in der Verarbeitungsmaschine zu vermeiden. Ein durch Schmelzereaktion von carboxylierten PO mit PA-Oligomeren erhaltenes Pfropfpolymer bewirkt in aus überwiegend (50-99,5 Masse-Z) EVAL und einem Unterschuß PO (PE, PP, EPM, Polybuten-1) bestehenden Blends sehr hohe Sperreigenschaften (EP 440.535, EP 440.560, EP 444.977). Auch in analogen Blendzusammensetzungen mit überwiegendem PO-Anteil (EP 440.559) sowie zusätzlich mit einem Anteil eines Füllstoffes, speziell einem Hydrotalcit, wird eine solche Wirkung erreicht (EP 440.557; EP 440.558).

Unter Zugrundelegung der bekannten Permeationswerte, einschließlich deren Feuchte- und Temperaturabhängigkeit, für die verschiedenen Polymeren, insbesondere der sehr geringen Gasdurchlässgikeiten von EVAL - und mit Abstand - auch der von PA und Polyestern, vor allem in verstreckter (orientierter) Form, und andererseits der im Unterschied zu den genannten Gasbarrierepolymeren hohen Wasserdampf-Sperrwirkung von PO werden gezielt Barriereschichtverbunde hergestellt.

Neben dem Zusammenfügen verschiedener Polymerfolien unter Verwendung eines Klebers (Kaschieren) werden besonders Laminartechnologien und vor allem Coextrusionstechniken angewandt, wonach durch Schichten eines speziellen Haftvermittlers (HV) eine wirksame, zumeist chemische Bindung zwischen den verschiedenen Polymerschichten gesichert wird (J. Rellmann u. H. Schenck, Kunststoffe 82 (1992)9, S. 729-738). Bekannt sind besonders Sandwichstrukturen, wie z.B. auf Basis von Fünfschichtextrusionsfolien mit dem Aufbau PO - HV - EVAL und/oder PA - HV - PO, d.h. Folienverbunde mit einer Gasbarrierekernschicht, die über je eine HV-Schicht, zumeist ein extrudierbares pfropfmaleinisiertes (oder -carboxyliertes) Olefinpolymer, mit den beiden polyolefinischen Deckschichten fest verbunden sind (EP 457.598; EP 461.836; JP 03.068.642).

Umgekehrt kann für spezielles Füllgut, insbesondere Wurstmassen, die Gasbarriereschicht, wie z.B. auf Basis von orientiertem PA und/oder PET, die Innen- und auch die Außenschicht bilden und als Wasserbarrierematerial eine den HV enthaltende PO-Kernschicht verwendet werden (DE 4.001.612; DE 4.017.046).

Alle diese bekannten Barriere-Polymerformmassen und insbesondere die unter Verwendung von EVAL, PA, und PET als Gasbarriere sowie von PO-Wasserdampfbarrieren, die einen Anteil an funktionalisiertem PO enthalten können, sowie von zusätzlichen separaten HV-Schichten erhaltenen Mehrschichtverbunde haben mindestens einen der beiden grundsätzlichen Nachteile:

-    eine begrenzte Gassperrwirkung, einschließlich des ungünstigen Verhältnisses von Sauerstoff- und Wasserdampfbarriere, unter Berücksichtigung eines noch kostengünstigen Materialeinsatzes (vor allem EVAL, spezielle VM bzw. HV und notwendige Zusatzstoffe)

-    hoher technisch-technologischer Aufwand, insbesondere durch zusätzliche extrudierte HV-Schichten (hohe Anforderungen hinsichtlich ihrer Extrudierbarkeit an die HV), und somit oft nicht mehr wirtschaftlich herstellbare Verpackungsmaterialien.

Diese Nachteile sind letzten Endes auf die unzureichende Wirkung der bekannten eingesetzten Verträglichkeits- und Haftvermittler, unabhängig, ob diese in eine der Polymer-bzw. Polymerblendschichten oder in Form einer separaten (zusätzlichen) extrudierten oder auf andere Art aufgetragenen HV-Schicht in den Verbund eingebracht werden, zurückzuführen.

Der vorliegenden Erfindung lag daher die Aufgabe zugrunde, auf Basis der bekannten technisch verfügbaren Gasbarriere-polymeren, insbesondere aus der Reihe der EVAL, der PA, der gesättigten Polyester (SP) und Polyacetale, und gegebenenfalls weiterer thermoplastischer Kunststoffe mit unterschiedlicher Gas- und Wasserdampf-Sperrwirkung Polymerkombinationen mit hoher Gasbarrierewirkung und den für anspruchsvolle Verpackungsmaterialien und Behälter, wie besonders Folien für unterschiedliche Lebensmittel, Flaschen und andere Behälter für Getränke, Kosmetika, Pharmazeutika, Agro(Chemikalien), Kraftstoffe usw., notwendigen Eigenschaften - unter Berücksichtigung einer hohen Wirtschaftlichkeit hinsichtlich des Materialeinsatzes sowie einer günstigen und in weiten Grenzen variierenden Verarbeitbarkeit - zur Verfügung zu stellen.

Erfindungsgemäß bestehen die thermoplastischen Formmassen für den Einsatz als Gasbarrierematerial aus

A) 30 bis 95 Masseteilen Gasbarrierepolymerisat(e) auf Basis von

    A1) 0-70 Masse-% Ethylen-Vinylalkohol-Copolymeren (EVAL) mit einem Anteil an Ethyleneinheiten von 10 bis 60 Mol-% und gewichtsmittleren Molmassen $\overline{M}_w$ zwischen 20.000 und 300.000 und

    A2) 0-100 Masse-% teilkristallinen und/oder amorphen Polyamiden (PA) mit gewichtsmittleren Molmassen $\overline{M}_w$ zwischen 5.000 und 80.000 und

    A3) 0-60 Masse-% gesättigten Polyestern (SP) aus der Reihe der polymeren Glykolester der Tere- und/oder Isophthalsäure mit gewichtsmittleren Molmassen $\overline{M}_w$ zwischen 10.000 und 100.000 und

    A4) 0-60 Masse-% Polyacetalen mit gewichtsmittleren Molmassen $\overline{M}_w$ zwischen 20.000 und 80.000

und

B) 5 bis 30 Masseteilen Verträglichkeits-/Haftvermittler in Form von durch Festphasenpfropfpolymerisation von 0,1 bis 10 Masse-% $\alpha,\beta$ -ethylenisch ungesättigten Mono- und/oder Dicarbonsäuren (Carboxylmonomeren), gegebenenfalls als Gemisch mit Comonomeren ohne reaktive funktionelle Gruppen (Zusatz-Comonomeren) in einem Massenverhältnis Carboxylmonomer(e) zu Zusatz-Comonomer(e) von 40 bzw. 50 bis 100 zu 60 bzw. 50 bis 0, auf 99,9 bis 80 Masse-% Rückgratpolymerisat aus der Reihe der

    B1) unpolaren olefinischen Homopolymeren und/oder Co- bzw. Terpolymeren, vorzugsweise Ethylen-Propylen-Copolymeren (EPM) sowie EPM/Polyethylen und/oder Polypropylen-Gemischen (EPM/PE u./o. PP) und/oder

    B2) polaren olefinischen Co- und Terpolymeren mit 1 bis 30 Mol-% eingebauten Vinylester- und/oder (Meth-)Acrylsäureester-Einheiten, vorzugsweise
    Ethylen-Vinylacetat-Copolymeren (EVA),
    Ethylen-Ethylacrylat-Copolymeren (EEA),
    Ethylen-n-Butylacrylat-Copolymeren (EBA) und
    Ethylen-(Methyl-)Methacrylat-Copolymeren (EMA) und/oder

    B3) Styren/Olefin-Zweiblock- und Styren/Olefin/Styren-Dreiblockcopolymeren mit einem Gesamtstyren-(Segment-) Anteil von 5 bis 50 Mol-%, vorzugsweise linearen Dreiblockcopolymeren mit einem Segmentaufbau
    Styren-Ethylen/Butylen-Styren (SEBS) und
    Styren-Ethylen/Propylen-Styren (SEPS)

erhaltenen Propfprodukten
und

C) 0 bis 65 Masseteilen Thermoplast(e) mit geringer Gasbarrierewirkung und gewichtsmittleren Molmassen $\overline{M}_w$ zwischen 10.000 und 500.000

    C1) aus der Reihe der Polyolefine (PO), insbesondere Polyethylene (PE), Polypropylene (PP), Ethylen-Propylen-(Dien)-Copolymere (EPM, EPDM), einschließlich EPM (EPDM) / PE und/oder PP-Mischungen, Polybuten-1 (PB), EVA, Ethylen/(Meth-)Acrylat-Co- und -Terpolymere sowie $C_5$- bis $C_{12}$-Olefinhomo- und -copolymere;

C2) der Styrenhomo- und -mischpolymeren, insbesondere Polystyren (PS), Poly ($\alpha$-Methylstyrene) (PMS), schlagzähe PS bzw. PS-Kombinationen (PS-HI), Styren/Acrylnitril- und Styren/Methylmethacrylat-Copolymere (SAN, SMMA) sowie andere Styren-Co- und -Terpolymere;

C3) der Polycarbonate (PC), einschließlich Polyestercarbonate und

C4) der Polyphenylenether (PPE), einschließlich PPE/Polymer-Blends (modifiz. PPE),

und, bezogen auf einen Polymergesamtanteil A) plus B) plus C) von 100 Masseteilen,

D) 0 bis 300 Masseteilen Verstärkungs- und/oder Füllstoffe, insbesondere aus der Reihe der (kugelförmigen) Calciumcarbonate, (plättchenförmigen) Kalium-Aluminium- und/oder Magnesiumsilikate sowie der (nadelförmigen) Calciumsilikate, und

E) Funktions-Zusatzstoffen sowie Verarbeitungshilfsstoffen, vorzugsweise Antioxidantien und/oder Wärme-, Licht- und UV-Stabilisatoren; Farbstoffe, Pigmente; Gleit-, Entformungsmittel und andere, in den üblichen Konzentrationen zwischen 0,05 und 10 %, bezogen auf die gesamte Formmasse.

Entsprechend Patentanspruch 2 sind die - unter Berücksichtigung einer hohen Gasbarrierewirkung bei gleichzeitiger Sicherung eines hohen mechanischen Kennwertniveaus sowie Haftvermögens (Siegelnahtfestigkeiten bzw. Schälwiderstände) und nicht zuletzt der Wirtschaftlichkeit - bevorzugten erfindungsgemäßen Formmassen-Zusammensetzungen zu entnehmen.
Eines der wesentlichen Haupteinsatzgebiete der erfindungsgemäßen Barrierematerialien, die Verarbeitung zu Mehrschichtblas- und/oder Mehrschichtbreitschlitzfolien, wie weiter unten dargestellt, ist durch die Patentansprüche 3 und 4 ausgewiesen.

## Formmassen-Bestandteile

A1) Als wichtige Barrierepolymerkomponente in den erfindungsgemäßen Formmassen werden EVAL mit einem Ethylengehalt von 10 bis 60 Mol-%, vorzugsweise von 20 bis 45 Mol-%, entsprechend einer Dichte zwischen 1,30 und 1,10 g/cm$^3$, erhalten durch Verseifung entsprechend zusammengesetzter Ethylen/Vinylacetat-Copolymerer (EVA) bis zu Verseifungsgraden oberhalb 90 %, vorzugsweise 95 %, verwendet.
Die hervorragenden Gasbarriere-Eigenschaften von EVAL werden durch $O_2$-Permeabilitätskoeffizienten $P_{02}$ (20 °C, 0 % relative Feuchte) zwischen etwa 0,05 und 5 (cm$^3$ • 20 µm) / (m$^2$ • d • bar) dokumentiert.

A2) Als PA-Komponente für die erfindungsgemäßen Formmassen eignen sich die linearen und partiell aromatischen teilkristallinen sowie amorphen thermoplastisch verarbeitbaren Polyamide mit einer relativen Viskosität von 2 bis 5, vorzugsweise von 2,2 bis 4,0 (gemessen in einer 1-masse-%igen Lösung in Kresol oder in 96-%iger $H_2SO_4$ bei 25 °C), entsprechend gewichtsmittleren Molmassen $\overline{M}_w$ zwischen 5000 und 80.000, vorzugsweise zwischen 15.000 und 60.000 (US 2.071.250, US 2.071.251, US 2.130.523, US 2.241.322, US 2.312.966, US 2.512.606, US 3.393.210, EP 39.524).
Neben den wichtigsten verwendbaren teilkristallinen linearen PA, insbesondere PA 6 und PA 66, Polyundecanolactam (PA 11), Polylaurinlactam (PA 12), Polyhexamethylenazelainamid (PA 69), Polyhexamethylensebacinamid (PA 610) und nicht zuletzt Polytetramethylenadipinamid (PA 46) (EP 38.094, EP 38.582, EP 39.524), können auch Mischungen dieser PA oder Copolyamide, bevorzugt solche, die sowohl Einheiten von $\epsilon$-Caprolactam als auch Einheiten von Adipinsäure und Hexamethylendiamin (PA 66/6), gegebenenfalls als Dicarbonsäure teilweise eine aromatische Säure wie Terephthal- und/oder Isophthalsäure enthalten (PA 6/6T, PA 66/6T, PA 66/6I, PA 66/6/6T u.a.) (EP 129.195, EP 129.196), eingesetzt werden.
Auch die als Gasbarriere gut geeigneten amorphen PA werden auf gleichem Wege, so z.B. durch Umsetzung von Isophthalsäure, gegebenenfalls einen geringeren Terephthalsäureanteil enthaltend, mit Hexamethylendiamin oder auch einem anderen linearen Diamin Poly(hexamethylen-isophthalamid) (PA 6I) und das entsprechende Polycokondensat (PA 6IT), erhalten.

Andererseits werden durch Umsetzung äquimolarer Mengen einer aliphatischen Dicarbonsäure, insbesondere Adipinsäure, mit einem aromatischen Diamin, wie z.B. m-Xylylendiamin, die Polyarylamide, auch zu den teilkristallinen partiell aromatischen Polyamiden zählend, wie das schon erwähnte Poly(m-Xylylenadipamid) (PA XMD6), welches eine sehr gute Gasbarriere darstellt, hergestellt.

A3) Aus der Gruppe der gesättigten Polyester (SP) sind bevorzugt die hochmolekularen linearen aromatischen Polyester (Intrinsic-Viskositäten von 0,4 bis 1,2 dl/g), die durch Polykondensation äquimolarer Zusammensetzungen aus Terephthalsäure bzw. ihren Estern und Alkandiolen erhalten werden, verwendbar (Becker/Braun, Kunststoff-Handbuch 3/1, Carl Hanser Verlag, München 1992, S. 7-113).

Als bevorzugte Polyester können vor allem die für Verpackungszwecke bekannten Polyethylenterephthalate (PET) und Polybutylenterephthalate (PBT), einschließlich die durch zusätzliche Einkondensation aliphatischer drei- oder vierbasischer Carbonsäuren bzw. von Diolgemischen erhaltenen Copolyester (DE 1.900.270, DE 2.407.674, DE 2.407.776, DE 2.715.932, US 3.692.744), insbesondere statistische PET/PBT-Copolyester und die aus überwiegend PBT-Segmenten aufgebauten Block-Copolyester (DE 2.756.167, DE 3.040.999), verwendet werden.

Auch die aus höhermolekulareren aromatischen Dicarbonsäure- und Glykoleinheiten aufgebauten Polyester, insbesondere das Polyethylennaphthalat (PEN), sind als Barrierematerial bzw. -komponente geeignet.

A4) Zu den als Formmassenbestandteil mit hoher Gasbarrierewirkung verwendbaren Polyacetalen, zu denen die Homo- und Copolymeren von Aldehyden und Acetalen, bestehend aus -CHR-O-Bausteinen, hinzuzurechnen sind, gehören die aus Formaldehyd und/oder Trioxan erhaltenen Homopolymeren (Polyformaldehyd, Polytrioxan) mit identischen $-CH_2-O$-Strukturen, d.h. Polyoxymethylene (POM), ferner die den höhermolekulareren zyklischen Ethern entsprechenden Homopolymerisate, wie Polydioxolan, Poly-1,3-dioxepan und Poly-1,3,6-trioxocan, sowie die aus Formaldehyd und/oder Trioxan zusammen mit einem weiteren polymerisierfähigen Monomeren bzw. Präpolymeren mit acetalischer Struktur, z.B. Dioxolan, erhaltenen Copolymeren mit statistischem oder blockartigem Aufbau (K. Weissermel u.a., Kunststoffe 54 (1964), S. 410; W. Kern u.a., Angew. Chem. 74 (1961) S. 183) und auch die unter Zusatz, zumeist in geringerer Konzentration, eines dritten Monomers, wie beispielsweise Butandiolglycidether, erhaltenen Terpolymeren (Becker/Braun, Kunststoff-Handbuch 3/1, Carl Hanser Verlag, München 1992, S. 300 ff. H.-D. Sabel u.a. "4. Polyacetale").

B) Für die erfindungsgemäßen Formmassen haben sich als besonders geeignete Verträglichkeits- und Haftvermittler (HV) - Komponente B) im Polymerblend - die mittels radikalischer Festphasenpfropfung bei Temperaturen zwischen 40 und 100 °C hergestellten Pfropfcopolymeren bestimmter Zusammensetzung erwiesen (DD 275.161, I)D 266.358, DD 300.977; DE 4.123.972, EP 469.693, WO 93/24537, Deutsche Patentanmeldung P 4342605.0), insbesondere die unter Verwendung von unpolaren olefinischen Homo-, Co- und Terpolymeren (PO), wie PP, PE-LD, PE-LLD, PE-HD und vorzugsweise EPM, einschließlich EPM/PP und/oder PE-Kombinationen, als Rückgratpolymere und freie Carboxylgruppen enthaltenden α, β-ethylenisch ungesättigten Mono- und/oder Dicarbonsäuren, vorzugsweise Acryl- und Methacrylsäure, Malein- und Fumarsäure, als Carboxyl-Pfropfmonomere, gegebenenfalls in Abmischung mit bis zu maximal 50 Masse-%, bezogen auf die Gesamtmonomermasse, Zusatzcomonomer(e) ohne reaktive funktionelle Gruppen, vorzugsweise Styren und/oder α-Methylstyren, mit einem auf 100 Masseteile vorgelegtes PO-Rückgrat aufgepfropften Anteil von 0,1 bis 25 Masseteilen, vorzugsweise von 2 bis 15 Masseteilen, erhaltenen Pfropfpolymerprodukten (B1), die unter Verwendung von polaren olefinischen Co- und Terpolymeren mit 1 bis 30 Mol-% einpolymerisiertem nichtolefinischen Anteil, vorzugsweise EVA mit 5 bis 25 Masse-% VAC, oder EEA, auch EBA und EMA mit jeweils 5 bis 30 Masse-% (Meth-)Acrylsäureester-Einheiten, als Pfropfrückgrate und von oben genannten Carboxyl-Pfropfmonomeren, gegebenenfalls in Abmischung mit bis zu maximal 50 Masse-%, bezogen auf die Gesamtmonomermasse, Zusatzcomonomer(e), vorzugsweise Styren und/oder α-Methylstyren, mit einem auf 100 Masseteile vorgelegtes Rückgratpolymer insgesamt aufgepfropften Anteil von 0,1 bis 25 Masseteilen, vorzugsweise von 2 bis 13 Masseteilen, erhaltenen Pfropfpolymerprodukten (B2) und die unter Verwendung von linearen und radialen (sternförmigen) Styren/Olefin-Blockcopolymeren, vorzugsweise linearen Styren-Ethylen/Butylen-Styren- und Styren-Ethylen/Propylen-Styren-Dreiblockcopolymeren (SEBS und SEPS) der Zusammensetzung 5 bis 40 Mol-% Styrensegment-/60 bis 95 Mol-% EB- bzw. EP-Segmentanteil, als Pfropfrückgrate und von oben genannten Carboxyl-Pfropfmonomeren, gegebenenfalls in Abmischung mit bis zu maximal 60 Masse-%, bezogen auf die Gesamtmonomermasse, Zusatzcomonomer(e), vorzugsweise Styren und/oder α-Methylstyren, mit einem auf 100 Masseteile vorgelegtes Rückgrat-Blockcopolymerisat insgesamt aufgepfropften Anteil von 0,1 bis 25 Masseteilen, vorzugsweise von 2 bis 15 Masseteilen, erhaltenen Pfropfpolymerprodukten (B3).

C) Des weiteren können die erfindungsgemäßen Formmassen bestimmte Massenanteile an weiteren Thermoplasten mit höherer Gaspermeabilität enthalten. Gleichzeitig kann diese Polymergruppe mit geringer Gasbarriere- aber dafür im allgemeinen hoher Wasserdampfbarrierewirkung als haftfähiges Polymerschichtmaterial verwendet werden. Das betrifft vor allem olefinische Homo-, Co- und Terpolymere (C1), wie besonders

* Polyethylen mit niedriger Dichte (0,900-0,932 g/cm$^3$), einschließlich geringe Anteile ($\leq$3 Masse-%) an höheren Olefinen enthaltend, nach dem Hochdruckverfahren (PE-LD);

* lineare Polyethylene niederer Dichte (0,915-0,935 g/cm$^3$) mittels Niederdruckpolymerisation (PE-LLD) (H. Münstedt u. H.-J. Walter, Kunststoffe 83 (1993) 10, S. 725-728);

* Polyethylene hoher Dichte (0,940-0,980 g/cm$^3$) mittels unterschiedlicher Niederdruck- bzw. Mitteldruckpolymerisationsverfahren, gegebenenfalls unter Verwendung geringer Mengen an höheren Olefinen erhalten (PE-HD) (C. Gondro, Kunststoffe 83 (1993)10, S. 729-732);

* isotaktische Polypropylene (PP), einschließlich die durch Einpolymerisieren höherer Olefine erhaltenen Random- oder Blockcopolymeren, bevorzugt hergestellt mittels Suspensions(Slurry)-, Gasphasenverfahren oder einer Kombination aus Masse(Bulk)- und Gasphasenpolymerisation, wobei neben den Standardprodukten auch solche, die den Technischen Kunststoffen in wichtigen Eigenschaften entsprechen und unter der Bezeichnung "PP based Advanced Materials" (PP AM) gehandelt werden, verwendet werden können (... Kunststoffe 83 (1993)10, S. 732-737);

* weitere olefinische Homopolymere, wie Polybuten-1 (PB), Polyisobutylen (PIB) und C$_5$- bis C$_{12}$-Polyolefine;

* Co- und Terpolymere auf Basis von Olefingemischen, einschließlich einer Dien-Komponende, wie z.B. Dicyclopentadien oder 5-Ethyliden-2-norbornen, insbesondere elastomere peroxid-vernetzbare Ethylen/Propylen-Copolymere (EPM) und schwefel-vernetzbare Ethylen/Propylen/Dien-Terpolymere (EPDM) (W. Hofmann, Kunststoffe 80 (1990)10, S. 1204-1209), einschließlich thermoplatische Elastomere (TPE) auf Basis vernetzter und unvernetzter EP-Kautschuk/Polyolefin(PE, PP)-Verschnitte (TPE-0) (W. Hofmann, Kunststoffe 74 (1984) 2, S. 109-111; ebenda 80 (1990) 10, S. 1210-1212).

Außer den unpolaren Olefinpolymeren (PO) können auch aus Olefinmonomer- sowie Vinylester- und/oder (Meth-) Acrylsäureestereinheiten aufgebaute polare olefinische Copolymere als Formmassenbestandteil eingesetzt werden. Bevorzugt geeignet ist die breite Palette an Ethylen/Vinylacetat(VAC)-Copolymeren (EVA) mit unterschiedlicher Zusammensetzung entsprechend VAC-Gehalten von etwa 5 bis 85 Masse-%, verschiedener Molmasse und Struktur (H. Streib u.a. Kunststoffe 67 (1977)3, S. 118-121, E. Rohde, Kautsch. + Gum. - Kunstst. 45 (1992)12, S. 1044-1051; K. Adler u. K.-P. Paul, Kunststoffe 70 (1980)7, S. 411-418; DE 1126613, DE 1495660, DE 1495767, DE 2927088).

Weiterhin können die entsprechend der breiten EVA-Palette zusammengesetzten Ethylen/Ethylacrylat-(EEA), Ethylen/n-Butylacrylat- (EBA) sowie Ethylen/(Methyl-) Methacrylat-Copolymeren (EMA) in den erfindungsgemäßen Formmassen eingesetzt werden.

Letztlich stellen auch die unter Verwendung von Metallocen-Katalysatoren ("Insite"-Technologie) ganz gezielt aufzubauenden Copolymer-Strukturen, insbesondere die als Polyolefin-Plastomere (POPs), im allgemeinen mit einem Comonomeranteil auf Basis höherer $\alpha$-Olefine unter 20 Mol-%, oder als Polyolefin-Elastomere (POEs) mit einem Anteil über 20 Mol-% Comonomer(en), in den letzten Jahren vorgestellten und vor allem für Verpackungs-(Mehrschicht-) Folien geeigneten Spezialpolymeren, zu denen auch die entsprechend hergestellten Styren-Ethylen-Copolymeren, cyclo-olefinischen Copolymeren sowie die mittels Metallocen-Technologie erhaltenen syndiotaktischen Polypropylene und auch syndiotaktischen Polystyrene (letztere unter C2 einzuordnen) gehören (J. Wolters, Kunststoffe 83 (1993)12, S. 985-987; J. Okuda, Nachr. Chem. Tech. Lab. 41 (1993)1, S. 8-14, R. Mühlhaupt, ebenda 41 (1993)12, S. 1341-1351), mögliche Blend- bzw. Schichtverbundkomponenten für die erfindungsgemäßen Formmassen dar.

Auch die klassische Styrenpolymere (C2), gegebenenfalls in Form von Mischungen bzw. Polymerblends, können als Formmassenkomponente bzw. als Schichtverbundmaterial fungieren, wobei außer den Homopolymeren Polystyren (PS) und Poly($\alpha$-Methylstyren) (PMS) vor allem (hoch-) schlagzähes PS (PS-HI), insbesondere aus überwiegend PS und/oder PMS, gegebenenfalls auch Styren-(Meth-) Acrylnitril- (SAN) oder Styren-Methylmethacrylat-Copolymerisat (SMMA), und einem ungesättigten Dien-Kautschuk (BR, SBR, IR, NR, NBR; Zwei- und Dreiblockcopolymere des Types SB, SI, SBS, SIS) oder einem gesättigten Kautschuk, wie z.B. Acrylatkautschuk (ACM), EPM bzw. TPE-O und Styren/Olefin-Zwei- bzw. Styren/Olefin-/Styren-Dreiblockcopolymere (SEB, SEP bzw. SEBS, SEPS), bestehenden Kombinationen (U. Reichert, Kunststoffe 83 (1993)10, S. 737-740, H. Jenne, Kunststoffe 74 (1984)10, S. 551) verwendbar sind.

Des weiteren gehören in diese Produktklasse außer den Copolymeren SAN und SMMA die abgeleiteten Modifizierungen, wie besonders Styren/Acrylnitril/(Meth-)Acrylat-Ter- bzw. -Pfropfpolymere (ASA) und Styren/Acrylnitril/EP(D)M-Produkte (AES), einschließlich deren Blends (K. Schneider und E. Frohberg, Kunststoffe 80 (1990)10, S. 1099-1106).

Die Ester der Kohlensäure (C3), d.h. die aromatischen Polycarbonate (PC), besitzen hohe Gaspermeabilitäten, sind aber einerseits wegen ihrer strukturellen Einfachheit sowie andererseits ihrer weit gefächerten chemischen Variabilität eine mögliche Polymerblend-bzw. Polymerschichtverbundkomponente (Braun/Becker, Kunststoff-Handbuch, Carl Hanser Verlag, München, 1992, S. 177-288; Lapp, M., Plaste u. Kautsch. 37 (1990)11, S. 361).

Neben dem wichtigsten, durch Umsetzung des unter der Bezeichnung Bisphenol A (BPA) bekannten 2,2-(4,4'-Dihydroxydiphenyl)-propans (Dian) mit Phosgen erhaltenem BPA-PC, dem Standard-PC (DE 1570703, DE 2063050, DE 2211956; FR 1561518; US 2970131, US 2991273, US 3028365, US 3062781, US 3148172, US 3275601), können gegebenenfalls auch die weiterentwickelten PC, insbesondere Trimethylcyclohexanon (TMC)-Bisphenol-PC oder die TMC-BP/BPA-Copolycarbonate bzw. Abmischungen aus BPA-PC und TMC-BP-PC, als Zusatzpolymerkomponente eingesetzt werden (W. Uerdingen, Kunststoffe 83 (1993)10, S. 760-763).

Im erweiterten Sinne werden zu den Polycarbonaten nicht nur die durch Substitution des BPA durch andere, insbesondere halogenierte und alkylierte (methylierte) BPA-Derivate, sondern auch die durch Austausch des Phosgens durch Chloride höherer Dicarbonsäuren erhaltenen und erfindungsgemäß einsetzbaren Polyestercarbonate gerechnet (M. Schnell "Chemistry and Physics of Polycarbonates", New York, London, Sidney; Intersc. Publ. 1964).

Die PC können gegebenenfalls auch in Form ihrer bekanntesten Polymerblends verwendet werden, wie z.B. auf der Grundlage der Kombinationen PBT/PC (C. Plachetta, Plast Europe (1992)5, 610); SP(vzw. PBT)/PC (DD 290431; EP 469404; DE 1569448, DE 2035390, DE 2248242, DE 2659338; US 3130177, US 4264437, US 4257937); PC/Acrylnitril-Butadien-Styren (ABS) (Kunststoff-Handbuch 3/1, S. 155, Carl Hanser Verlag, München 1992).

Als mögliche Formmassen-Komponente können auch die zur Polymerklasse der Polyether gehörenden Polyphenylenether (PPE), erhalten durch oxidative Kupplung von 2,6-disubstituierten Phenolen mit einer reduzierten Viskosität $\pi$red von 0,2 bis 0,9 dl/g, vorzugsweise von 0,4 bis 0,7 dl/g (gemessen in einer 1-masse-%igen Lösung in Chloroform bei 25 °C, nach DIN 53726) entsprechend gewichtsmittleren Molmassen $\overline{M}$w von 10000 bis 80000, vorzugsweise von 20000 bis 60000, eingesetzt werden (C4). Als Beispiele für Substituenten sind Halogenatome (Chlor, Brom) und Alkylreste mit 1 bis 4 Kohlenstoffatomen, die wiederum durch Halogenatome oder durch eine Hydroxylgruppe substituiert sein können, zu nennen. Bevorzugt wird der bekannteste Vertreter Poly(2,6-diphenyl-1,4-phenylen) ether (PPE), oft auf Grund seiner Verträglichkeit mit vinylaromatischen Polymeren (A. Noshay, "Blockcopolymers", S. 8-10, Academic Press 1977, 0. Olabisi, "Polymer-Polymer-Miscibility", 1979, S. 117-189) als PPE/PS-Blend oder in seiner mittels Aufpropfen funktioneller Monomerer modifizierten Form als Polymerblend mit PA und anderen Polymeren (WO 86/02086, WO 87/00540; EP 222246, EP 223116, EP 254048, EP 416435; US 3.379792, US 4.315086, US 4.338421, US 4.970272) eingesetzt. Stellvertretend für die verwendbaren Copolymeren auf Basis verschiedener substituierter Phenole sind die aus 2,6-Dimethylphenol/2,3,6-Trimethylphenol-Gemischen erhaltenen Copolymerisate zu nennen.

D) Außer den Polymerbestandteilen A), B) und C) können die erfindungsgemäßen Polymerblends gegebenenfalls als weiteren wesentlichen Formmassenbestandteil faserige oder besonders teilchenförmige Füllstoffe in einer Menge von 0 bis 75 Masse-%, vorzugsweise 5 bis 40 Masse-%, enthalten, wobei bevorzugt eingesetzt werden:

- kugelartige (mit weniger oder mehr stark ausgeprägter Vorzugsrichtung bzw. in allen 3 Raumrichtungen gleicher Orientierung) Füllstoffe, wie Glaskugeln und insbesondere Calciumcarbonate (natürliche und vorbehandelte Kreiden, Calcit oder präzipitiertes $CaCO_3$) mit mittleren Teilchendurchmessern zwischen 0,1 und 20 $\mu$m, vorzugsweise zwischen 0,5 und 10 $\mu$m,

- plättchenartige (mit zweidimensionaler Struktur) Füllstoffe auf Basis von Kalium-Aluminium-Silikaten, wie z.B. Glimmer (Muskovit, Phlogit), Feldspat und Kaolin, sowie besonders von Magnesium-Silikaten, vorzugsweise Talk in natürlicher und spezieller vorbehandelter Form mit Teilchengrößen zwischen 0,1 und 20 $\mu$m, vorzugsweise zwischen 0,2 und 10 $\mu$m,

- nadelförmige (mit eindimensionaler Struktur) Füllstoffe auf Basis von Calcium-Silikaten, wie die Wollastonite, insbesondere in vorbehandelter (silanisierter) Form,

- und ferner die eine unregelmäßige, splitterförmige Gestalt (mit schwach ausgerichteter Vorzugsrichtung) aufweisenden Füllstoffe, wie z.B. Quarze, Sande sowie besonders gemahlene Gläser.

Die aus den Polymerbestandteilen A) und B) sowie gegebenenfalls den Thermoplasten C) und den Füllstoffen D) bestehenden thermoplastischen Formmassen können darüber hinaus die bekannten Funktions-Zusatzstoffe E), wozu auch die Verarbeitungshilfsstoffe gehören, wie besonders

- Antioxidantien, Wärme-, Verarbeitungs-, Licht- und UV-Stabilisatoren;
- Nukleierungsmittel;
- Farbstoffe und Pigmente;
- Weichmacher und Fließmittel;
- Gleit- und Entformungsmittel;
- Flammschutzmittel und andere

in den für diese Zusatzstoffe üblichen Konzentrationen, im allgemeinen für die einzelnen Zusatzstoffe zwischen 0,05 und 10 %, für Flammschutzmittel gegebenenfalls in höherer Konzentration, bezogen auf die gesamte Formmasse, enthalten.

Die erfindungsgemäßen Formmassen können nach bekannten Verfahren und Technologien hergestellt werden, indem man die Ausgangskomponenten A) bis E) in üblichen Schmelzemischvorrichtungen, insbesondere bekannten Ein- und Zweischneckenextrudern bzw. -knetern, compoundiert. Um möglichst homogene Formmassen zu erhalten, ist eine intensive Durchmischung notwendig. Im allgemeinen sind mittlere Mischzeiten von 0,5 bis 10 Minuten bei Massetemperaturen im Bereich von 200 bis 300 °C erforderlich. Die Abmischreihenfolge der Komponenten kann variiert werden, wobei in der Regel zwei oder gegebenenfalls drei Komponenten oder prinzipiell auch alle (polymeren) Komponenten vorgemischt werden können. Es kann von Vorteil sein, bestimmte Formmassenbestandteile, insbesondere Füllstoffe, erst in einer dem Einzug nachfolgenden Zone des Extruders hinzuzugeben.

Auf der Grundlage der erfinderischen Formmassen-Zusammensetzungen sind verschiedene Formteile/Formkörper und besonders Folien unterschiedlicher Dicke mit überraschend hohen Gas-Impermeabilitäten, vor allem hoher Sperrwirkung gegenüber $O_2$, die anhand der für die Einzelkomponenten bekannten und erhaltenen Meßwerte nicht erwartet werden konnten, herstellbar.

Diese überraschende (synergistische) Wirkung ist zurückzuführen auf die Verwendung der morphologisch, strukturmäßig und chemisch spezifischen Verträglichkeits- und Haftvermittler (HV) entsprechend Formmassen-Komponente B), die hinsichtlich Herstellungsverfahren und Zusammensetzung folgende Bedingungen erfüllen:

- Anbindung wirksamer (reaktiver) Gruppen in Form von speziell strukturierten Pfropfreisern auf olefinische Rückgratketten durch
- radikalische Festphasenpfropfpolymerisation
- unter Verwendung von freie Carboxylgruppen enthaltenden Monomeren, gegebenenfalls auch in Form von Monomermischungen mit einem Unterschuß bzw. etwa gleichem Massenanteil an nicht-funktionellen Monomeren, unter Erhalt von
- Festphasenpfropfprodukten mit einem in relativ weiten Grenzen variierbaren Carboxylgruppengehalt, der im Bereich zwischen etwa 1,5 und 4,5 Masse-%, bezogen auf die Pfropfproduktmasse, hinsichtlich des erfindungsgemäßen Einsatzes besonders wirksam und wirtschaftlich ist.

Demgegenüber ungeeignet und damit außerhalb des Schutzanspruches ist die diesbezügliche Verwendung von:

- Copolymeren mit in der Hauptkette einpolymerisierten Anteilen an Carboxylmonomeren oder auch anderen Funktionsmonomeren (MSA, Acrylate, Methacrylate, Amide, Epoxide, Hydroxide usw.), wie z.B. die bekannten (Meth-) Acrylsäure/Ethylen-Copolymerisate, Acrylsäure (oder MSA)/(Meth-)Acrylat/Ethylen-Terpolymerisate,

- Pfropfpolymerprodukten, die mittels Schmelzepfropfen (z.B. im Extruder) von Funktionsmonomeren, vorzugsweise MSA, unabhängig von spezieller Art und Konzentration des/der Monomeren, Initiatoren/Inhibitoren bzw. Vernetzungsmittel, hergestellt worden sind,

- und Pfropfpolymerprodukten, die zwar mittels radikalischer Festphasenpfropfung aber generell mit einem deutlichen Überschuß an nicht-funktionellen Zusatz-Comonomeren, wie Styrenen,

- oder mit ungeeigneten Funktionsmonomeren, d.h. zwar $\alpha,\beta$-ethylenisch ungesättigten polaren, aber keine freien Carboxylgruppen besitzenden Verbindungen, beispielsweise MSA und andere besonders für die Schmelzepfropfung verwendeten Säureanhydride, Halbester usw., gepfropft worden sind.

Unter Verwendung der erfindungsgemäßen Festphasenpfropfprodukte als HV sind, wie auch aus dem nachfolgenden Ausführungsbeispiel anhand der aufgeführten Kennwerte (Tabelle 2: $P_{02}$ und $P_{VK}$; Tabelle 3: mechanische und thermische Eigenschaften) ersichtlich, eine Vielzahl erfinderischer Polymerkombinationen - unter Berücksichtigung der jeweils angestrebten mittleren bis hohen Barrierewirkung gegenüber den atmosphärischen Gasen aber auch gegenüber Lösemitteln, wie z.B. Kraftstoffgemischen, Aroma- und Duftstoffen und anderen, einschließlich Wasserdampf bzw. dessen Einfluß auf die Permeabilität aller anderen Stoffe -, möglich.

Die Bewertung der erfindungsgemäßen Formmassen genügt einer Reihe verallgemeinerter wesentlicher, voneinander abhängiger Kriterien:

1. <u>Sperrwirkung</u> gegenüber Gasen wird erfüllt, wie es anhand der niedrigen $O_2$-Permeabilitätskoeffizienten ($P_{O2}$) mit generell $\leq$ 10 und für schnell verderbliche Lebensmittel $\leq$ 1 (cm$^3$ · mm)/(m$^2$ · 24 h · bar) ausgewiesen wird. Durch gezielte Wahl der Formmassenbestandteile (Art und Konzentration) ist die Sperrwirkung einstellbar (von sehr hoher Barriere bis mittelmäßiger Barriere). Die Permeabilitäten für $N_2$, $CO_2$, gegebenenfalls $SO_2$ und andere Gase, sind aus den entsprechenden $P_{O2}$-Werten in der für die praktischen Einsatzfälle ausreichenden Genauigkeit abschätzbar.

2. <u>Haftwirkung</u>, d.h. die Wirksamkeit der als HV in den Formmassen eingesetzten speziell zusammengesetzten "Festphasenpfropf"-Modifikatoren, gegenüber den als Unterlage bzw. Deck- oder Verbundschicht dienenden Materialien, insbesondere anderen Polymeren bzw. Polymerschichten in Coextrudaten/Mehrschichtfolien, Laminaten und Kaschierverbunden, ist so hoch, daß auf den zusätzlichen (aufwendigen) Einsatz separater HV- bzw. Klebstoffschichten in vielen Fällen verzichtet werden kann.

3. <u>Verarbeitbarkeit</u> (unterschiedliche Verwendung) ist gegenüber den reinen Gasbarriere-Polymeren (besonders EVAL, aber auch PA, PET und POM) und auch den meisten bekannten Gasbarriere-Polymerblends in breiteren Grenzen variierbar. Das bezieht sich insbesondere auf die Nutzbarkeit unterschiedlicher Verarbeitungstechniken, -technologien und -bedingungen unter Berücksichtigung der verschiedenen Anwendungsfälle (Ein- und Zwei- bis Siebenschichtfolien, blasgeformte Flaschen und andere Behälter, unterschiedliche Laminate usw.), einschließlich der Variationsbreite an möglichen anderen einzubeziehenden Verbund- und Deckschichtmaterialien, wie auch Verwendbarkeit von Regenerat- bzw. Abfallpolymerwerkstoffen (z.B. Polyester-, Polyolefin- und auch verschiedene Barrierematerialabfälle).

4. <u>Eigenschaftsniveau,</u> insbesondere hinsichtlich

* mechanischer Kennwerte (gegenüber den bekannten Barrierepolymer-Systemen vor allem höheres Zähigkeits/Steifigkeits-Niveau einstellbar),
* optischer Kennwerte (generell Lichtdurchlässigkeiten $\geq$ 80 %),
* thermischer Kennwerte (hohe Wärmeformbeständigkeit)
* spezieller Folieneigenschaften (hohe Verbundhaftung und Siegelnahtfestigkeit, gezielt einstellbare Weiterreißfestigkeit bzw. Schälwiderstände)

sichert ein weites Verarbeitungs- und Einsatzfeld.

Insgesamt gesehen ist die erfindungsgemäße Lösung ein äußerst wirtschaftlicher, in ihrer Anwendbarkeit hinsichtlich Auswahl der Formmassen-Einzelbestandteile und mittels üblicher technischer/technologischer Mittel einfach zu realisierender Weg, um für zahlreiche Anwendungen Barrierematerialien mit einem insgesamt ausreichenden bis sehr hohen mechanischen, thermischen und optischen Niveau, guter und innerhalb weiter Grenzen variabler Verarbeitbarkeit sowie mit der für den jeweiligen Einsatzfall notwendigen Sperrwirkung gegenüber Gasen - und entsprechend den Erfordernissen - gegenüber allen anderen in Frage kommenden Stoffen zur Verfügung zu stellen.

Als ein bevorzugter verarbeitungs- und anwendungstechnischer Einsatzfall für die erfindungsgemäßen Polymerblends sind Barrierefolien zu nennen, wobei es sich als vorteilhaft für diese spezielle Verwendung erwiesen hat, daß für den Aufbau der im allgemeinen mittels bekannter Coextrusionsverfahren hergestellten Mehrschichtverbunde auf Grund der guten Haftung der aus der erfinderischen Formmasse bestehenden Barriereschicht gegenüber den anderen im Verbund - entweder als Kern-, Zwischen- und/oder Deckschichten - angeordneten Polymerschichten in vielen Fällen keine materialseitig und verarbeitungstechnisch kostenaufwendigen HV-Schichten benötigt werden und das aus mehreren Kunststoffschichten bestehende Verbundmaterial recycelfähig ist, damit selbst wieder als Bestandteil in die Mehrschicht-Barrierefolie eingearbeitet werden kann.

Dieser wichtige Vorteil hinsichtlich der Produktivität und Qualität bei der Barrierefolienherstellung findet seinen konkreten Ausdruck in der Realisierbarkeit neuer, einfacher Schichtanordnungen, für die weniger komplizierte Produktionsanlagen genutzt werden können.

Im Unterschied zu dem bisher üblichen Schichtaufbau (Basis: EVAL-Barrierematerial als Kernschicht)

PO - HV - EVAL - HV - PO, wobei PO ein übliches olefinisches Homo- oder Copolymeres ist (gegebenenfalls auch ein Styrenpolymerisat), vereinfacht sich der Aufbau unter Verwendung des erfindungsgemäßen Barrierematerials (erf. BM) entsprechend

PO - erf. BM - PO oder - besonders vorteilhaft bei Einsatz von wiederverwertbarem Kunststoffabfall (KA), günstigerweise der Kunststoffbarrierefolie-Verschnitt, anstelle des bisher bekannten grundsätzlichen Schichtaufbaus

PO - KA - HV - EVAL - HV - PO zu einem Aufbau mit einer hochwirksamen doppelten Schicht aus dem erf. BM entsprechend

PO - erf.BM - KA - erf. BM - PO

So kann z.B. besonders wirtschaftlich eine 5-Mehrschicht-Verbundfolie mit folgenden Schichtdicken 50µm PP - 20µm erf.BM - 700µm KA - 20µm erf.BM - 50µm PP, bevorzugt verwendbar für Fertiggerichte-Menüschalen, hergestellt werden.

An diesem vorgenannten recht speziellen Verwendungsbeispiel wird aber andererseits auch die Vielfalt bzw. Variationsbreite hinsichtlich des möglichen Schichtaufbaues unter Verwendung der erfinderischen Barrierematerialien deutlich.

Für andere Einsatzfälle, wie z. B. extrusionsgeblasene Verpackungshüllen für Wurstmassen, weitere pastöse Lebensmittel und andere Erzeugnisse, kann die erfinderische Gasbarriereschicht auch als Innen- und/oder Außendeckschicht, kombiniert mit beispielsweise einer kostengünstigen polyolefinischen feuchtebeständigen Kernschicht (Wasserdampfbarriere), für die auch spezielle Plastabfall- bzw Folienverschnitt-Materialien verwendet werden können, angeordnet sein.

## Ausführungsbeispiel

Die in den erfindungsgemäßen sowie den Vergleichs-Formmassen verwendeten Polymerkomponenten, einschließlich als Rückgratpolymere für die HV-Herstellung, sind in Tabelle 1 mit ihren charakteristischen Kenngrößen (Dichte, Schmelzindex MFR, Molmasse Mw bzw. Mn) sowie ihren Sauerstoff-Permeabilitätskoeffizienten, volumetrisch gemessen an nicht isolierten 80 um bis 100 um dicken Monofolien bei 23 °C unter Verwendung von trockenem Sauerstoff (DIN 53 380) und umgerechnet auf Normalbedingungen (0 °C, 1,013 bar = 760 Torr) sowie eine Foliendicke von 1 mm, aufgeführt.

Im einzelnen wurden folgende Blendkomponenten eingesetzt:

### A) Gasbarrierepolymere

A1) Ethylen-Vinylalkohol-Copolymere (EVAL)
Verseifte EVA mit einem Verseifungsgrad von ca. 98 % und einem Anteil an Ethyleneinheiten von 32 Mol-% (EVAL-I) sowie von 44 Mol-% (EVAL-II).

A2) Polyamide
Polyhexamethylenadipamid (PA 66),
Polycaprolactam (PA 6),
Poly (m-Xylylenadipamid) (PA MXD6),
Polyhexamethylenisophthalamid (PA 6I)

A3) Gesättigte Polyester
Polyethylenterephthalat (PET),
Polybutylenterephthalat (PBT)

A4) Polyacetale
Polyoxymethylen (POM)

### B) Verträglichkeits- und Haftvermittler (HV)

B1) Unpolare PO-Rückgrate (jeweils 100 Masseteile vorgelegt)

| EPM-g-AS (1) | Festphasenpfropfprodukt durch Pfropfen von 5 Masseteilen (Ma-Tln.) Acrylsäure (AS) auf EPM (s. Tabelle 1) |
|---|---|
| EPM-g-AS/S (2) | Festphasenpfropfprodukt durch Pfropfen von 6 Ma-Tln. AS und 4 Ma-T1n. Styren (S) auf EPM |
| PP-g-AS/S (3) | Festphasenpfropfprodukt durch Pfropfen von 6 Ma-Tln. AS und 4 Ma-Tln. S auf PP (s. Tabelle 1) |

| Vergleichs-HV | |
|---|---|
| E-co-AS (1V) | statistisches Copolymerisat mit 10 Ma-% einpolymerisierter AS in die Ethylenkette ($\overline{M}$ w = 35000) |
| (EPM-g-MSA)$_{DSE}$ (2V) | Schmelzepfropfprodukt/2 Ma-T1e. MSA auf EPM im Doppelschneckenextruder (DSE) (Massetemperatur $T_M$: 200 °C) |
| PP-g-S/AS (3V) | Festphasenpfropfprodukt durch Pfropfen von 4 Ma-Tln. AS und 12 Ma-Tln. S |

B2) <u>Polare Olefincopolymer-Rückgrate (jeweils 100 Ma-T1e vorgelegt)</u>

| EVA-g-AS (4) (4*) | Festphasenpfropfprodukt durch Pfropfen von 5 Ma-T1n. AS (ggf. 3 Ma-T1n. AS *) auf EVA (s. Tabelle 1) |
|---|---|
| EVA-g-AS/S (5) | Festphasenpfropfprodukt durch Pfropfen von 5 Ma-Tln. AS und 2,5 Ma-Tln. S auf EVA |

| Vergleichs-HV | |
|---|---|
| (EVA-g-AS)$_{DSE}$ (4V) | Schmelzepfropfprodukt/5 Ma-T1e. AS auf EVA im DSE ($T_M$: 205 °C) |
| EVA-g-S/AS (5V) | Festphasenpfropfprodukt durch Pfropfen von 5 Ma-Tln. AS und 10 Ma-Tln. S |

B3) <u>Styren/Olefin-Blockcopolymer-Rückgrate (jeweils 100 Ma-T1e. vorgelegt)</u>

| SEBS-g-AS/S (6) | Festphasenpfropfprodukt durch Pfropfen von 5 Ma-Tln. AS und 5 Ma-Tln. S auf SEBS (Gesamt-PS-Anteil: 29 Ma.-% s. auch Tabelle 1) |
|---|---|
| SEPS-g-AS (7) | Festphasenpfropfprodukt durch Pfropfen von 5 Ma-Tln. AS auf SEPS (PS: 13 Ma.-%) |
| SEPS-g-AS/S (8) | Festphasenpfropfprodukt durch Pfropfen von 5 Ma-Tln. AS und 5 Ma-Tln. S auf SEPS |

| Vergleichs-HV | |
|---|---|
| (SEBS-g-MSA)$_{DSE}$ (6V) | Schmelzepfropfprodukt/2 Ma-Tle. MSA auf SEBS im DSE ($T_M$: 250 °C) |

C) <u>Weitere Thermoplaste mit hoher Gaspermeabilität Polycarbonate</u>
Bisphenol A-Polycarbonat (BPA-PC)
<u>Polyphenylenether</u>
Poly(2,6-dimethyl-1,4-phenylen)ether (PPE), eingesetzt als Blend mit ca. 50 Masse-% Polystyren (PPE mod.)
<u>Polyolefine (PO), gleichzeitig z.T. Rückgratpolymere für B1) und B2)</u>
Polyethylen hoher Dichte (PE-HD), einpolymerisiert ca. 2 Masse-% $C_4$- bis $C_6$-Olefine
Polyethylen niedriger Dichte (PE-LD) isotaktisches Polypropylen (PP), Isotaxieindex: 0,92 Ethylen/Propylen-Copolymerisat, Zusammensetzung 67 Masse-% Ethylen-/33 Masse-% Propyleneinheiten (EPM) Ethylen/Vinylacetat-Copolymerisat, Zusammensetzung 86 Masse-% Ethylen-/14 Masse-% VAC-Einheiten (EVA)

D) Füllstoffe

D1) Kreide  (CaCO$_3$-Gehalt: 98,9 %), mittlerer Teilchendurchmesser: 2,8 µm, Dichte: 2,70 g/cm$^3$

D2) Talk  (Gehalt an SiO$_2$: 59 %, MgO: 31,5 %, Al$_2$O$_3$: 2,0 %) mittlerer Teilchendurchmesser: 6,5 µm, Dichte: 2,75 g/cm$^3$

E) Funktionszusatzstoffe

an bekannten Antioxidantien, Verarbeitungs- und Lichtstabilisatoren sowie an Gleitmitteln in den üblichen Konzentrationen zwischen 0,1 und 1,0 % für die einzelnen Species, bezogen auf die gesamte Formmasse.

Unter Verwendung der Formmassenbestandteile A) bis E) wurden die erfindungsgemäßen Gasbarriere-Polymerblends sowie die den verschiedenen Blendkombinationen entsprechenden Vergleichs-Formmassen (s. Tabelle 2) mittels bekannter Schmelzecompoundiertechnologie (Verwendung eines Doppelschneckenextruders, Durchmesser D: 43 mm, Länge: 38 D) hergestellt.

Die in Tabelle 2 aufgeführten Formmassen repräsentieren eine Auswahl möglicher erfindungsgemäßer Zusammensetzungen, ausgewiesen anhand der ermittelten P$_{O2}$-Werte, die im Unterschied zu den mitangegebenen Vergleichsbeispielen (Vgl. 1.0 - Vgl. 2.6) sich außer niedrigeren O$_2$-Permeabilitäten auch durch eine höhere Sperrwirkung gegenüber organischen Lösemitteln, wie besonders aromatischen (Benzol, Toluol) und aliphatischen Kohlenwasserstoffen (entsprechend ausgewiesenen Permeabilitäten für Kraftstoffgemisch in Tabelle 2 (P$_{VK}$-Werte)), auszeichnen.

Die gute Verarbeitbarkeit der erfindungsgemäßen Polymerblends, insbesondere zu Blas- und Flachfolien sowie zu Kaschierverbunden, wird für einige ausgewählte Formmassen anhand des in Tabelle 3 ausgewiesenen Eigenschaftsbildes dokumentiert.

Tabelle 1: Verwendete Polymer-Komponenten A) und C)/teilweise Rückgrat für B) unter Angabe der Sauerstoffpermeabilität $P_{O2}$ ($cm^3 \cdot mm/m^2 \cdot d \cdot bar$)

| Polymer-Komponente | Dichte[1] (g/cm$^3$) | MFR[2] (g/10min) | mittlere Molmasse $\overline{M}n$ | mittlere Molmasse $\overline{M}w$ | $P_{O2}$ |
|---|---|---|---|---|---|
| A1) EVAL-I | 1,19 | 1,3 | | 135.000 | 0,03 |
| EVAL-II | 1,14 | 5,5 | | 122.000 | 0,1 |
| A2) PA 6 | 1,12 | 35 [a] | 22.000 | 45.000 | 2,3 |
| PA 66 | 1,13 | 56 [b] | 18.000 | 36.500 | 3,5 |
| PA MXD6 | 1,17 | — | 26.300 | | 1,1 |
| PA 6I | 1,18 | — | 25.000 | | 1,6 |
| A3) PET | 1,37 | — | 23.600 | 45.000 | 4,5 |
| PBT | 1,31 | — | 28.000 | 52.000 | 6,9 |
| A4) POM | 1,41 | 9,0 | 38.000 | | 4,0 |
| C) BPA-PC | 1,20 | 1,5 [b] | | 28.000 | 190 |
| PPE mod. | 1,06 | — | 20.000 | 46.000 | 220 |
| PE-LD | 0,918 | 24,2 | | 33.000 | 210 |
| PE-HD | 0,952 | 0,1 | 21.500 | 181.000 | 75 |
| EPM | 0,918 | 35 | 45.000 | 151.000 | 160 |
| PP | 0,911 | 11,2 [a] | | 159.000 | 90 |
| EVA | 0,931 | 3,6 | 23.000 | 141.000 | 190 |
| SEBS | 0,91 | — | 51.500 | | 245 |
| SEPS | 0,89 | 13 [c] | 80.000 | | 230 |

[1] ISO 1183
[2] DIN ISO 1133, 190°C/2,16 kp Auflagegewicht
[a] 230°C/2,16 kp
[b] 270°C/5 kp
[c] 200°C/10 kp

EP 0 703 279 B1

EP 0 703 279 B1

Tabelle 2: Erfindungsgemäße Formmassen-Zusammensetzungen und Vergleichs-Formmassen mit Angabe der Permeabilitätskoeffizienten für Sauerstoff $P_{O_2}$ ($cm^3 \cdot mm/m^2 \cdot d \cdot bar$) und für Kraftstoffgemisch (VK Super, bleifrei) $P_{VK}$ ($g \cdot mm/m^2 \cdot d$)

| Lfd.Nr. | A1) EVAL | A2) PA | A3)/A4) | B) (Nr.HV) | C) | D) | $P_{O2}$ | $P_{VK}$ |
|---|---|---|---|---|---|---|---|---|
| Vgl.1.0 | 50 I | 50 PA6 | – | – | – | – | 6,2 | 0,70 |
| Vgl.1.1 | 40 I | 48 PA6 | – | 12(2V) | – | – | 5,5 | 0,65 |
| 1.1 | 40 I | 48 PA6 | – | 12(1) | – | – | 1,2 | 0,48 |
| 1.2 | 40 I | 48 PA66 | – | 12(2) | – | – | 0,9 | 0,52 |
| 1.3 | 40 I | 38 PA6 | – | 6(1)+6(3) | – | 10 D1) | 0,1 | 0,33 |
| Vgl.1.4 | – | 70 PA6 | 30 PET | – | – | – | 12,5 | 0,82 |
| 1.4 | – | 62 PA6 | 26 PET | 12(2) | – | – | 2,0 | 0,55 |
| Vgl.1.5 | 40 II | 30 PA6 | – | 12(3V) | 18 PP | – | 11,2 | 0,92 |
| 1.5 | 40 II | 30 PA6 | – | 6(1)+6(3) | 10 PP+8 EPM | – | 3,8 | 0,95 |
| Vgl.1.6 | 40 I | 40 PA6 | – | – | 20 EVA | – | 20,2 | 6,5 |
| Vgl.1.7 | 40 I | 48 PA6 | – | 12(4V) | – | – | 13,0 | 0,59 |
| 1.7 | 40 I | 48 PA6 | – | 12(4) | – | – | 0,25 | 0,31 |
| Vgl.1.8 | 40 I | 28 PA6 | – | 12(5V) | – | 20 D2) | 10,5 | 1,2 |
| 1.8 | 40 I | 38 PA6 | – | 12(4) | – | 10 D2) | 0,1 | 0,28 |
| 1.9 | 20 I | 28 PA6 | – | 12(4*) | – | 40 D1) | 1,2 | 0,56 |
| Vgl.2,0 | 40 II | – | 50 PBT | – | – | 10 D1) | 21,6 | 1,6 |
| Vgl.2.1 | 60 II | – | 25 PBT | – | 15 BPA-PC | – | 25,0 | 1,1 |
| Vgl.2.2 | 50 II | – | 20 PBT | 12(5V) | 8 BPA-PC | 10 D1) | 27,3 | 1,2 |
| 2.2 | 50 II | – | 20 PBT | 12(5) | 8 BPA-PC | 10 D1) | 4,9 | 0,71 |
| 2.3 | 50 I | – | 20 POM | 12(4) | – | 20 D2) | 1,3 | 0,45 |
| Vgl.2.4 | 40 I | 48 PAMXD6 | – | – | 12 PPE mod. | – | 105 | 16 |
| 2.4 | 30 I | 48 PAMXD6 | – | 10(4) | 12 PPE mod. | – | 8,6 | 0,95 |
| Vgl.2.5 | 40 I | 38 PA6I | – | 12(1V) | – | 10 D1) | 16,3 | 2,6 |
| 2.5 | 40 I | 38 PA6I | – | 12(4) | – | 10 D1) | 5,1 | 0,83 |
| Vgl.2.6 | 30 II | 40 PA66 | – | 10(6V) | 10 PE-LD | – | 11,5 | 1,5 |
| 2.6 | 30 II | 40 PA66 | – | 10(6) | 10 PE-LD | – | 2,6 | 0,69 |
| 2.7 | 30 I | 40 PA6 | – | 10(7) | 10 PE-HD | – | 1,7 | 0,58 |
| 2.8 | 30 I | 30 PA6 | – | 10(8) | 10 PE-HD | 10 D2) | 1,2 | 0,48 |

Tabelle 3: Wichtige anwendungstechnische Eigenschaften an ausgewählten Polymerblends

| Kennwert (Einheit) | Prüfvor-schrift, DIN | Lfd. Nr. in Tab. 2 | | | | | | | |
|---|---|---|---|---|---|---|---|---|---|
| | | Vgl.1.1 | 1.1 | 1.3 | 1.8 | Vgl.1.5 | 1.5 | Vgl.2.6 | 2.8 |
| CHARPY-Schlag-zähigkeit $23^{\circ}$C ($kJ/m^2$) $-20^{\circ}$C | 53453 | 40 47 | 100%NB 100%NB | 100%NB 100%NB | 100%NB 100%NB | 14 11 | 24 20 | 14 12 | 100%NB 100%NB |
| CHARPY-Kerb-schlagz. $23^{\circ}$C ($kJ/m^2$) $-20^{\circ}$C | 53453 | 3,3 2,5 | 21 6,0 | 13 3,8 | 11 7,0 | 5,9 4,4 | 7,7 5,4 | 7,1 4,5 | 10,5 6,5 |
| Biegefestig-keit (MPa) | 53452 | 93 | 92 | 93 | 95 | 81 | 94 | 83 | 85 |
| Biege-E-Modul (MPa) | 53457 | 2710 | 2500 | 2910 | 3280 | 1850 | 2600 | 2100 | 2400 |
| Streckspannung (MPa) (50mm/min) | 53455 | 81 | 60 | 63 | 64 | 34 | 34 | 38 | 46 |
| Bruchdehnung(%) | 53455 | 132 | 87 | 55 | 50 | 14 | 49 | 9 | 15 |
| Shore Härte D | 53505 | 82 | 79 | 81 | 78 | 74 | 77 | 70 | 79 |
| VICAT-Erwei-chungstemp.($^{\circ}$C) (10N/Luft) | ISO 306 | 198 | 198 | 184 | 195 | 145 | 158 | 141 | 142 |

EP 0 703 279 B1

**Patentansprüche**

1.  Thermoplastische Formmassen mit Gasbarriere-Eigenschaften, bestehend aus

    A) 30 bis 95 Masseteilen Gasbarrierepolymeren auf Basis von

    A1) 0 bis 70 Masse-% Ethylen-Vinylalkohol-Copolymeren mit einem Anteil an Ethyleneinheiten von 10 bis 60 Mol-% und gewichtsmittleren Molmassen $\overline{M}w$ zwischen 20.000 und 300.000
    und

    A2) 0 bis 100 Masse-% teilkristallinen und/oder amorphen Polyamiden mit gewichtsmittleren Molmassen $\overline{M}w$ zwischen 5.000 und 100.000
    und

    A3) 0 bis 60 Masse-% gesättigten Polyestern aus der Reihe der polymeren Glykolester der Tere- und/ oder Isophthalsäure mit gewichtsmittleren Molmassen $\overline{M}w$ zwischen 10.000 und 100.000
    und

    A4) 0 bis 60 Masse-% Polyacetalen mit gewichtsmittleren Molmassen $\overline{M}w$ zwischen 20.000 und 80.000
    und

    B) 5 bis 30 Masseteilen Festphasenpfropfprodukt der Zusammensetzung

    B1) 99,9 bis 80 Masse-% unpolares olefinisches Rückgratpolymer oder -polymergemisch aus der Reihe der $C_2$- bis $C_{12}$-Olefin-Homo- und -Copolymeren, vorzugsweise Ethylen/Propylen-Copolymeren der Zusammensetzung 1 bis 99 % Ethylen-/ 99 bis 1 % Propyleneinheiten (EPM) sowie EPM/Polyethylen (PE) und/oder Polypropylen (PP)-Mischungen, und 0,1 bis 20 Masse-% aufgepfropfter Anteil aus 50 bis 100 Masseteilen $\alpha,\beta$-ethylenisch ungesättigter Mono- und/oder Dicarbonsäuren (Carboxylmonomere), vorzugsweise Acryl- und/oder Methacrylsäure, und 50 bis 0 Masseteilen $\alpha,\beta$-ethylenisch ungesättigter Verbindungen ohne reaktive funktionelle Gruppen (Zusatz-Comonomere), vorzugsweise Styrene, und/oder

    B2) 99,9 bis 80 Masse-% polares olefinisches Rückgratpolymer oder -polymergemisch aus der Reihe der zwischen 1 und 30 Mol-% Vinylester- und/oder Acrylsäureester- und/oder Methacrylsäureestereinheiten enthaltenden Olefinco- und -terpolymeren, vorzugsweise
    Ethylen/Vinylacetat-Copolymeren (EVA) und
    Ethylen/Ethylacrylat-Copolymeren (EEA), Ethylen/n-Butylacrylat-Copolymeren (EBA) sowie Ethylen/(Methyl-)Methacrylat-Copolymeren (EMA), und
    0,1 bis 20 Masse-% aufgepfropfter Anteil aus
    50 bis 100 Masseteilen Carboxylmonomer(e) und
    50 bis 0 Masseteilen Zusatz-Comonomer(e) und/oder

    B3) 99,9 bis 80 Masse-% Styren/Olefin-Blockcopolymer-Rückgrat aus der Reihe der zwischen 5 und 50 Mol-% Polystyren (PS)-Segmentanteil enthaltenden linearen und radialen Blockcopolymeren, vorzugsweise die entsprechend linear aufgebauten Styren-Ethylen/Butylen-Styren- (SEBS) und/oder Styren-Ethylen/Propylen-Styren-Dreiblockcopolymeren (SEPS), und 0,1 bis 20 Masse-% aufgepfropfter Anteil aus 40 bis 100 Masseteilen Carboxylmonomer(e) und 60 bis 0 Masseteilen Zusatz-Comonomer(e)
    und

    C) 0 bis 65 Masseteilen eines thermoplastischen Polymers oder Polymergemisches mit geringer Gasbarrierewirkung

    C1) aus der Reihe der olefinischen Homo-, Co- und Terpolymeren, insbesondere Polyethylene (PE), Polypropylene (PP), Ethylen-Propylen-(Dien)-Copolymere (EPM, EPDM), einschließlich EPM/PE und/oder PP- bzw. EPDM/PE und/oder PP-Mischungen, Ethylen/Vinylacetat-Copolymere (EVA) und Ethylen/(Meth-)Acrylat-Co- und -Terpolymere, Polybuten-1 (PB) und andere $C_5$- bis $C_{12}$-Olefinhomo- und -copolymere,
    und/oder

C2) aus der Reihe der Styrenhomo- und -mischpolymeren, insbesondere Polystyrene (PS), Poly $\alpha$-Methylstyrene) (PMS), einschließlich entsprechende Styren/ $\alpha$-Methylstyren-Copolymere, (hoch-)schlagzähe Polystyrene bzw. PS-Kombinationen (PS-HI) unter Verwendung unterschiedlicher Kautschukkomponenten, Styren/Acrylnitril- und Styren/Methylmethacrylat-Copolymere (SAN, SMMA) sowie deren Pfropfprodukte unter Verwendung von Dien-Kautschuken oder anderen gesättigten Kautschukkomponenten, und/oder

C3) aus der Reihe der Polycarbonate, einschließlich der Polyestercarbonate, insbesondere Bisphenol A-Polycarbonat (BPA-PC), und/oder

C4) aus der Reihe der Polyphenylenether, insbesondere Poly(2,6-diphenyl-1,4-phenylen)ether (PPE) und PPE/Polymer (PS oder PA)-Blends (modifiz. PPE), und, bezogen auf einen Polymergesamtanteil A) plus B) plus C) von 100 Masseteilen,

D) 0 bis 300 Masseteilen Verstärkungs- und/oder Füllstoffe,
und, bezogen auf die gesamte thermoplastische Formmasse,
in Konzentrationen zwischen 0,05 und 10 Masse-%

E) Funktions-Zusatzstoffen, insbesondere die bekannten Antioxidantien, Wärme-, Licht- und UV-Stabilisatoren und/oder Nukleierungsmittel und/oder Farbstoffe, Pigmente und/oder Fließ-, Gleit- und Entformungsmittel und andere Verarbeitungshilfsstoffe.

2. Thermoplastische Formmassen mit Gasbarriere-Eigenschaften nach Anspruch 1, gekennzeichnet durch Zusammensetzungen aus

A1) 10 bis 50 Masse-%, vorzugsweise 20 bis 40 Masse-%, Ethylen-Vinylalkohol-Copolymeren mit einem Anteil an Ethyleneinheiten von 20 bis 45 Mol-%,

A2) 20 bis 70 Masse-% Polyamid, vorzugsweise 30 bis 50 Masse-%, PA 6 und/oder PA 66 und/oder PA MXD6 und/oder PA 6I, einschließlich deren Abmischungen untereinander bzw. ihrer entsprechenden Copolyamide,

B) 5 bis 20 Masse-%, vorzugsweise 8 bis 15 Masse-%, eines funktionalisierten olefinischen Copolymeren, insbesondere einen Anteil an gepfropfter Acrylsäure- und/oder Methacylsäure von 2,0 bis 6,5 %, bezogen auf die gesamte Festphasenpfropfproduktmasse, enthaltenden EPM (B1) und/oder EVA (B2) und/oder SEBS bzw. SEPS (B3),

C) 0 bis 30 Masse-%, vorzugsweise 5 bis 20 Masse-%, PE und/oder PP und/oder EPM und/oder EVA (C1) und/oder Styrenhomo- oder -mischpolymeren (C2) und/oder PC (C3) bzw. PPE, einschließlich PPE-Blends (C4),

D) 0 bis 50 Masse-%, vorzugsweise 5 bis 40 Masse-%, Kreide oder Talkum, und

E) 0,05 bis 10,0 Masse-% Funktionszusatzstoffe.

3. Verwendung der thermoplastischen Formmasse nach den Ansprüchen 1 und 2 zur Herstellung von Formkörpern und Folien, vorzugsweise von Mehrschichtfolien mit der thermoplastischen Formmasse mit Gasbarriere-Eigenschaften als Kernschichtmaterial und polyolefinischen Deckschichten.

4. Verwendung der thermoplastischen Formmasse nach den Ansprüchen 1 und 2 zur Herstellung einer Multischichtfolie mit doppelter Gasbarriereschicht entsprechend einem Schichtaufbau
    PO - BM - KA - BM - PO, wobei

PO:  Polyolefin mit 20 bis 200 µm, vorzugsweise 30 bis 70 µm Dicke

BM:  thermoplastische Formmasse mit Gasbarriere-Eigenschaften mit 10 bis 40 µm, vorzugsweise 15 bis 30 µm Dicke

KA: Kunststoffabfall, insbesondere Barrierefolienabfall, mit 200 bis 1000 µm, vorzugsweise 500 bis 800 µm Dikke.

**Claims**

1. Thermoplastic molding materials with gas barrier properties, consisting of

A) 30 to 95 parts by weight of gas barrier polymers based on

A1) 0 to 70 percent by weight of ethylene vinylalcohol copolymers with a portion of ethylene units of 10 to 60 mole percent and a weight-average molecular weight Mw of between 20.000 and 300,000. and

A2) 0 to 100 percent by weight of semi-crystalline and/or amorphous polyamides with a weight-average molecular weight Mw of between 5.000 and 100.000, and

A3) 0 to 60 percent by weight of saturated polyesters of the polymeric glycol esters series of the terephthalic acid and/or isophthalic acid with a weight-average molecular weight Mw of between 10,000 and 100.000, and

A4) 0 to 60 percent by weight of polyacetalene with a weight-average molecular weight Mw of between 20.000 and 80,000, and

B) 5 to 30 parts by weight of solid-phase graft product of the composition

B1) 99.9 to 80 percent by weight of non-polar olefinic backbone polymer or polymer mixture of the $C_2$ to $C_{12}$ olefinic homopolymer and copolymer series, preferably however of ethylene/propylene copolymers of the composition 1 to 99 % ethylene / 99 to 1% propylene units (EPM) and EPM / polyethylene (PE) and/or polypropylene (PP) mixtures, and a 0.1 to 20 percent by weight grafted portion of 50 to 100 parts by weight of alpha-, beta-ethylenic unsaturated mono and/or dicarboxylic acids (carboxyl monomers), preferably however acrylic and/or methacrylic acid, and of 50 to 0 parts by weight of alpha-, beta-ethylenic unsaturated compounds without a reactive functional group (additive comonomers), preferably however styrene, and/or

B2) 99.9 to 80 percent by weight of polar olefinic backbone polymer or polymer mixture of the series of olefinic copolymers or olefinic terpolymers containing 1 to 30 mole percent vinyl ester and/or acrylic acid ester and/or methacrylic acid ester units, preferably however ethylene / vinylacetate copolymers (EVA) and ethylene / ethyl acrylate copolymers (EEA). ethylene / n-butylacrylate copolymers (EBA) as well as ethylene / (methyl-) methacrylate copolymers (EMA). and a grafted portion of 0.1 to 20 percent by weight of 50 to 100 parts by weight of carboxylic monomer(s) and of 50 to 0 parts by weight of additive comonomer (s), and/or

B3) 99.9 to 80 percent by weight of styrene / olefinic block copolymer backbone of the series of linear and radial block copolymers containing between 5 and 50 mole percent of a segmental portion of polystyrene (PS), preferably however the respective linear styrene-ethylene / butylene-styrene (SEBS) and/or styrene-ethylene / propylene-styrene three-block copolymers (SEPS), and 0.1 to 20 percent by weight of a grafted portion of 40 to 100 parts by weight of carboxylic monomer(s) and of 60 to 0 parts by weight of additive comonomer(s). and

C) 0 to 65 parts by weight of a thermoplastic polymer or polymer mixture of low gas barrier efficiency

C1) of the series of olefinic homopolymers, copolymers or terpolymers, more specifically polyethylene (PE), polypropylene (PP), ethylene-propylene-(diene) copolymers (EPM, EPDM), including EPM/PE and/or PP or EPDM/PE and/or PP mixtures, ethylene / vinyl acetate copolymers (EVA) and ethylene / (meth) acrylate copolymers or terpolymers, polybutene-1 (PB) and other $C_5$ to $C_{12}$ olefinic homopolymers or copolymers,
and/or

C2) of the series of styrene homopolymers or mixed polymers, more specifically polystyrene (PS), poly (alpha-methylstyrene) (PMS), including respective styrene / alpha-methylstyrene copolymers, (highly) impact resistant polystyrenes or PS combinations (PS-HI) made with different rubber components, styrene / acrylonitrile and styrene / methylmethacrylate copolymers (SAN. SMMA) as well as their grafted products made with diene rubbers or other such saturated rubber components,
and/or

C3) of the series of polycarbonates, including polyester carbonates, more specifically bisphenol A-polycarbonate (BPA-PC),
and/or

C4) of the series of polyphenylene ether, more specifically poly(2,6-diphenyl-1,4-phenylene)ether (PPE) and PPE/polymer (PS or PA) blends (modified PPE), and referred to a polymer total portion A) plus B) plus C) of 100 parts by weight.

D) 0 to 300 parts by weight of amplifiers and/or fillers, and. referred to the total thermoplastic molding compound, in concentrations of between 0.05 and 10 percent by weight.

E) functional additives, more specifically the known antioxidants, thermal, light and UV stabilizers and/or nucleation agents and/or colorants, pigments and/or developers and/or eluents, lubricants, and release agents or other such processing agents or aids.

2. Thermoplastic molding compounds with gas barrier properties according to claim 1 above, but characterized by compositions of

A1) 10 to 50 percent by weight, preferably however 20 to 40 percent by weight, of ethylene vinylalcohol copolymers with a portion of ethylene units of 20 to 45 mole percent,

A2) 20 to 70 percent by weight of polyamide, preferably however 30 to 50 percent by weight, of PA 6 and/or PA 66 and/or PA MXD6 and/or PA 6I, including mixtures thereof, or with respective copolyamides,

B) 5 to 20 percent by weight, preferably however 8 to 15 percent by weight, of a functionalized olefinic copolymer, more specifically of EPM (B1) and/or EVA (B2) and/or SEBS or SEPS (B3) containing 2.0 to 6.5 percent of grafted acrylic acid and/or methacrylic acid, referred to the total solid-phase grafted product weight,

C) 0 to 30 percent by weight, preferably however 5 to 20 percent by weight, of PE and/or PP and/or EPM and/or EVA (C1) and/or styrene homopolymers or mixed polymers (C2) and/or PC (C3) or PPE, including PPE blends (C4),

D) 0 to 50 percent by weight, preferably however 5 to 40 percent by weight, of chalk or talcum, and

E) 0.05 to 10.0 percent by weight of functional additives.

3. Use of the thermoplastic molding compounds according to claims 1 and 2 above for making moldings and films, preferably however multilayer films with the thermoplastic molding compounds with gas barrier properties as the core layer material and with polyolefinic finishing coats.

4. Use of the thermoplastic molding compounds according to claims 1 and 2 above for making a multilayer film with a double gas barrier layer and a layer structure of
PO - BM - KA - BM - PO, whereby

PO:   polyolefin, 20 to 200 μm, preferably however 30 to 70 μm thick

BM: thermoplastic molding compound with gas barrier properties, 10 to 40 μm, preferably however 15 to 30 μm thick

KA: plastic waste, more specifically barrier film waste, 200 to 1,000 μm. preferably however 500 to 800 μm thick.

**Revendications**

1. Matières à mouler thermoplastiques à propriétés de barrière gazeuse, se composant de

A) 30 à 95 parts en poids de polymères à barrière gazeuse à base de

A1) 0 à 70% en poids de copolymère d'éthylène et d'alcool de vinyle avec une part en unités d'éthylène de pourcentage molaire de 10 à 60 et des poids moléculaires de poids moyens Mw entre 20.000 et 300.000 et

A2) de 0 à 100 % en poids de polyamides en partie cristallins et / ou amorphes avec des poids moléculaires de poids moyens Mw entre 5.000 et 100.000 et

A3) de 0 à 60 % en poids de polyesters saturés de la série des esters de glycol polymériques de l'acide téréphtalique et / ou isophtalique avec des poids moléculaires de poids moyens Mw entre 10.000 et 100.000 et

A4) de 0 à 60 % en poids de polyacétals avec des poids moléculaires de poids moyens Mw entre 20.000 et 80.000 et

B) de 5 à 30 parts en poids d'un produit de greffage en phase solide composé

B1) de 99,9 à 80% en poids d'un polymère ou d'un mélange de polymères de support oléfinique apolaire de la série des homopolymères et copolymères d'oléfine de $C_2$ à $C_{12}$, de préférence des copolymères d'éthylène / de propylène constitués de 1 à 99% d'unités d'éthylène / de 99 à 1 % d'unités de propylène (EPM) ainsi que d'EPM / polyéthylène (PE) et / ou de mélanges de polypropylène (PP) et de 0.1 jusqu'à 20 % en poids d'une partie greffée de 50 à 100 % part en poids d'acides monocarboniques et / ou dicarboniques $\alpha,\beta$ éthyléniques (monomères carboxyliques). de préférence d'acide acrylique et / ou méthacrylique et de 50 à 0 parts en poids de composés $\alpha,\beta$ éthyléniques non saturés sans groupes fonctionnels réactifs (comonomères d'appoint) de préférence des styrènes et / ou

B2) de 99,9 jusqu'à 80 % en poids d'un polymère ou d'un mélange de polymères oléfinique polaire de la série des copolymères et terpolymères d'oléfine contenant un pourcentage molaire entre 1 et 30 d'unités d'ester de vinyle, et / ou d'ester acrylique et / ou d'ester méthacrylique, de préférence des copolymères d'éthylène / acrylate de vinyle (EVA) et des copolymères d'éthylène / acrylate d'éthyle (EEA), des copolymères d'éthylène / n-acrylate de butyle (EBA) ainsi que des copolymères d'éthylène / de méthacrylate (de méthyle) (EMA) et de 0.1 à 20 % en poids de parties greffées de 50 à 100 parts en poids de monomère (s) de carboxyle et de 50 à 0 parts en poids de comonomère (s) d'appoint et / ou

B3) de 99,9 à 80 % en poids de copolymère séquencé de support de styrène / oléfine de la série des copolymères séquencés linéaires et radiaux contenant un pourcentage molaire entre 5 et 50 de polystyrène (PS) - partie segmentaire, de préférence les copolymères triséquencés édifiés en conséquence de manière linéaire au styrène-éthylène / butylène-styrène (SEBS) et / ou de styrène-éthylène / propylène-styrène (SEPS), et d'une partie greffée de 0,1 à 20 % en poids à partir de 40 à 100 parts en poids de monomère (s) de carboxyle et de 60 à 0 parts en poids de comonomère (s) d'appoint et

C de 0 à 65 parts en poids d'un polymère thermoplastique ou d'un mélange de polymères à faible effet de barrière gazeuse

> C1) de la série des homopolymères, copolymères et terpolymères oléfiniques, en particulier de polyéthylènes (PE), de polypropylènes (PP), de copolymères d'éthylène-propylène(diène) (EPM, EPDM), y compris d'EPM / PE et / ou de PP- ou EPDM / PE et / ou des mélanges de PP, de copolymères d'éthylène / acétate de vinyle (EVA) et de copolymères et terpolymères d'éthylène / (méth-) acrylate, de polybutène-1 (PB) et d'autres homopolymères et copolymères d'oléfine de $C_5$ à $C_{12}$,
> et / ou

> C2) de la série des homopolymères et copolymères de styrène, en particulier les polystyrènes (PS), les poly (a-styrènes de méthyle) (PMS), y compris les copolymères de styrène / $\alpha$-styrènes de méthyle correspondants, les polystyrènes (très) résilients et les combinaisons de PS (PS-HI) sous utilisation des constituantes diverses de caoutchouc, les copolymères au styrène / acrylonitrile et au styrène / méthacrylate de méthyle (SAN, SMMA) ainsi que leurs produits de greffage sous l'utilisation de caoutchouc diénique ou d'autre constituantes au caoutchouc saturées,
> et / ou

> C3) de la série des polycarbonates, y compris des carbonales de polyester, en particulier du polycarbonate bisphénolique A (BPA-PC),
> et / ou

> C4) de la série des éthers polyphéniléniques, en particulier de l'éther poly(2,6 diphénilique-1,4 phénilénique) (PPE) et du PPE / polymère de mélanges (PS ou PA) (PPE modifié), et, rapporté à une part totale de polymère A) plus B) plus C) de 100 parts en poids,

D) de 0 à 300 parts en poids de matières de remplissage et / ou de renforcement, et, par rapport à la totalité de la matière à mouler thermoplastique.
en concentrations entre 0,05 et 10 % du poids,

E) additifs fonctionnels, en particuliers les antioxydants bien connus, les stabilisants thermiques, lumière et UV et / ou les agents nucléants et / ou les colorants, pigments et / ou les agents de fluage, lubrifiants et de démoulage et les autres additifs.

2.   Matières à mouler thermoplastiques avec propriétés de barrière gazeuse selon la spécification 1, caractérisées par les compositions à partir de

> A1) 10 à 50% en poids, de préférence de 20 à 40 % en poids, de copolymères d'éthylène - alcool vinylique avec une part en pourcentage molaire de 20 à 45 d'unité d'éthylène,

> A2) de 20 à 70 % en poids de polyamide, de préférence de 30 à 50 % en poids, de PA 6 et / ou de PA 66 et / ou de PA MXD6 et ou de PA 6I, y compris de leur mélange entre eux ou de leurs copolyamides correspondants.

> B) de 5 à 20 % en poids, de préférence de 8 à 15 % en poids, d'un copolymère oléfinique fonctionnalisé, en particulier d'un EPM (B1) et / ou EVA (B2) et /ou SEBS ou SEPS (B3) contenant une part d'acide acrylique greffé et / ou d'acide méthacrylique de 2,0 à 6,5 %, rapportée au poids total de produit greffé en phase solide,

> C) de 0 à 30 % en poids, de préférence de 5 à 20 % en poids, de PE et / ou de PP et / ou d'EPM et / ou d'EVA (C1) et ou d'homopolymères ou de copolymères de styrène (C2) et / ou de PC (C3) ou PPE, y compris les mélanges de PPE (C4).

> D) de 0 à 50 % en poids, de préférence de 5 à 40 % en poids, de craie ou de talc, et

> E) de 0,05 à 10,0 % en poids d'additifs fonctionnels.

3.   Utilisation de la matière à mouler thermoplastique selon les spécifications 1 et 2 pour la production de pièces moulées et de feuilles, de préférence de feuilles multicouche avec la matière à mouler thermoplastiques aux propriétés de barrière gazeuse pour la couche intérieure et en matière polyoléfinique pour les couches extérieures.

4. Utilisation de la matière à mouler thermoplastique selon les spécifications 1 et 2 pour la production d'une feuille multicouche avec couche double à barrière gazeuse selon la structure suivante des couches

PO - BM - KA - BM - PO,

avec

PO: polyoléfine de 20 à 200 µm, de préférence de 30 à 70 µm d'épaisseur

BM: matière à mouler thermoplastique aux propriétés de barrière gazeuse de 10 à 40 µm, de préférence de 15 à 30 µm d'épaisseur

KA: déchets de matière plastique, en particulier déchets de feuilles à barrière gazeuse de 200 à 1000 µm, de préférence de 500 à 800 µm d'épaisseur.